# EUROPEAN PATENT SPECIFICATION

(11) **EP 4 513 609 B1**
(45) Date of publication and mention of the grant of the patent: **03.12.2025**
(21) Application number: 24179179.7
(22) Date of filing: 31.05.2024
(51) Int. Cl.: B65B 5/04, B65C 1/02, H01M 10/052, H01M 10/42, H01M 50/107, H01M 50/119, H01M 50/14, H01M 50/152, H01M 50/159, H01M 50/186, H01M 50/562, H01M 50/566, H01M 50/171, H01M 50/166, H01M 10/0587, H01M 10/0525, H01M 10/058

(54) **PRODUCTION PROCESS FOR RECHARGEABLE CYLINDRICAL LITHIUM BATTERY WITH BUILT-IN BMS BOARD**
HERSTELLUNGSVERFAHREN FÜR EINE WIEDERAUFLADBARE ZYLINDRISCHE LITHIUMBATTERIE MIT EINGEBAUTER BMS-PLATTE
PROCÉDÉ DE PRODUCTION D'UNE BATTERIE AU LITHIUM CYLINDRIQUE RECHARGEABLE AVEC CARTE BMS INTÉGRÉE

(30) Priority: 09.08.2023 CN 202310996048
(43) Date of publication of application: 26.02.2025
(73) Proprietor: Shenzhen Total Future Technology Co., Ltd., Shenzhen (CN)
(72) Inventor: ZENG, Jinhui, Shenzhen (CN); YANG, Dexin, Shenzhen (CN); LIU, Qiangen, Shenzhen (CN); LIU, Haiyan, Shenzhen (CN)
(74) Representative: Metida

(56) References cited:
- EP-B1- 2 273 599
- WO-A1-2013/159454

## Description

### Technical Field

The invention relates to the technical field of cylindrical lithium batteries, in particular to a production process for a rechargeable cylindrical lithium battery with a built-in BMS board. Prior art documents WO 2013/159454 and EP2273599 disclose production methods for battery units.

### Background Art

Cylindrical lithium battery is a common rechargeable battery, which is cylindrical. The cylindrical lithium battery is composed of a positive electrode, a negative electrode and an electrolyte, the positive electrode of the cylindrical lithium battery is usually composed of lithium compounds (such as lithium cobaltate, lithium iron phosphate, etc.) and conductive agents, and the negative electrode is usually composed of carbon materials.

At present, there are cylindrical lithium batteries without BMS system and with BMS system on the market. There are size standards for the external dimensions of the lithium batteries such as AA battery and AAA battery. Therefore, if the cylindrical lithium battery is necessarily provided with BMS, it is necessary to reduce the cell size of the lithium battery, make an independent sealed battery cell and an independent BMS and then put the two into the battery case for electrical connection. In the cylindrical lithium battery with the BMS, the BMS is separated from the battery cell, resulting in great reduction in battery cell size, reduction in battery capacity, increase in the overall weight of the battery, high manufacturing cost, complex installation during production and processing, and other problems, limiting the scope and performance of battery application.

Therefore, how to make a rechargeable cylindrical lithium battery with a miniaturized built-in BMS board has become a technical problem in the field.

### Summary of the Invention

The invention aims to provide a production process for a rechargeable cylindrical lithium battery with a built-in BMS board, which can be used to produce a miniaturized rechargeable cylindrical lithium battery with the built-in BMS board, the entire production process is simple and convenient, the production cost is low, and the rechargeable cylindrical lithium battery with the built-in BMS board manufactured by using the invention can minimize the impact of smaller cell capacity due to the need to install the BMS board.

To solve the above technical problems, the invention is realized by the following technical proposal:
A production process for a rechargeable cylindrical lithium battery with a built-in BMS board is characterized by including a cap making process, a battery cell manufacturing process and a finished product assembly and manufacturing process, wherein
the cap production process includes Step 1: Mount a positive metal column, an IC and other electronic components onto a PCBA to complete the mounting process of a BMS main board; Step 2: Spray waterproof coating on a plastic support, then spray glue, air-dry, and perform soft treatment for the plastic support; Step 3: Put a positive aluminum cap into the plastic support with glue air-dried, and then put the PCBA and
a negative metal ring in turn to complete the production of the lithium battery cap with the built-in PCBA;
the battery cell production process includes Step 1: Batching; Step 2: Coating; Step 3: Cell production; Step 4: Winding;
the finished product assembly and production process includes Step 1: Put a battery cell in a steel shell, and laser-weld a negative aluminum foil to the inner bottom of the steel shell; Step 2: Roll a slot for the steel shell so that the battery cell is fixed in the steel shell and cannot fall out; Step 3: Laser-weld a positive electrode of the battery cell to the edge of the back of the positive aluminum cap; Step 4: Bake the component with the cap welded to remove moisture and then inject electrolyte; Step 5: Seal, and make the entire circle of the opening of the steel shell rolled inwards to be extruded on the negative metal ring, conducting the negative electrode; Step 6: Label a corresponding printing sleeve according to the appearance requirements of the customer, and print a code; Step 7: Put into a formation cabinet for formation and perform aging treatment; Step 8: Fully charge rechargeable lithium batteries after aging, and then sort out the batteries with different capacities and voltages; Step 9: Pack in a special packing box for the rechargeable lithium batteries for safe storage and transportation.

Preferably, the plastic support (5) in Step 2 of the cap production process is made of PP soft material, and the position where glue is sprayed is the bottom surface of a sealant groove (10) and the plastic support (5); the sealant groove (10) is arranged on the inside wall of the plastic support (5).

Preferably, Step 1 of the battery cell production process is specifically as follows: Prepare solution, positive PVDF and solvent NMP, negative SBR and CMC.

Preferably, Step 2 of the battery cell production process is specifically as follows: Apply the prepared solution to the aluminum foil.

Preferably, Step 3 of the battery cell production process is specifically as follows: Add the coated aluminum strip and nickel sheet to an adhesive paper isolation layer, and cut into pole pieces of suitable size.

Preferably, Step 4 of the battery cell production process is specifically as follows: Wind the produced pole piece and diaphragm paper into a cylindrical shape to complete the production of battery cell.

Preferably, in Step 7 of the finished product assembly and production process, the formation time is 2-3 days to activate the capacity of the battery cell, and the aging time is 8 days.

Preferably, the plastic support (5) is connected to the upper part of the inside wall of the steel shell (6), the positive aluminum cap (4) is arranged in the plastic support (5), the PCBA (3) is arranged in the positive aluminum cap (4), the negative metal ring (2) is arranged in the outer edge of the upper end of the PCBA (3), the positive metal column (9) is connected to the middle of the upper end of the PCBA (3), the battery cell (7) is connected to the inside of the steel shell (6), the end of the positive electrode (8) of the battery cell extends out of the battery cell (7), and the negative aluminum foil (11) is connected to the inner bottom end of the steel shell (6);
A positive plastic cap (1) is connected to the outer side of the positive metal column (9).

Compared with the prior art, the invention has the following advantages: The invention solves the size and weight problems caused by the traditional external BMS by integrating the BMS board inside the cylindrical lithium battery, and has high integration level and stability, providing protection for battery charging and discharging, and improving the safety performance of the battery. A BMS chip is used to monitor the battery status, including voltage, current, temperature, etc., and control the charging and discharging management of the battery according to the monitoring results; a power management chip is used to control the power supply and charging of the battery; a battery control chip is used to control the discharge and charging of the battery; a multi-circuit protector is used to protect the battery against overvoltage, undervoltage, overcurrent and short circuit.

When the miniaturized cylindrical lithium batteries are manufactured, it is necessary to seal the electrolyte to isolate gas and liquid from the BMS main board. However, the electrode of the battery must pass through an isolation structure to reach the BMS main board to be electrically connected with the BMS main board, which is very difficult. The traditional lithium battery manufacturing process is difficult to overcome the technical difficulty. The production process of the invention can overcome the technical difficulty, and easy, convenient and low-cost production and processing can be achieved.

### Brief Description of the Drawings

To more clearly describe the technical proposal of the embodiments of the invention, the drawings required for the description of the embodiments is briefly introduced below. Obviously, the drawings described below are only some embodiments of the invention, and other drawings can be obtained by ordinary technicians in the field according to these drawings without creative labor.
FIG. 1 is the process flow diagram of the invention.

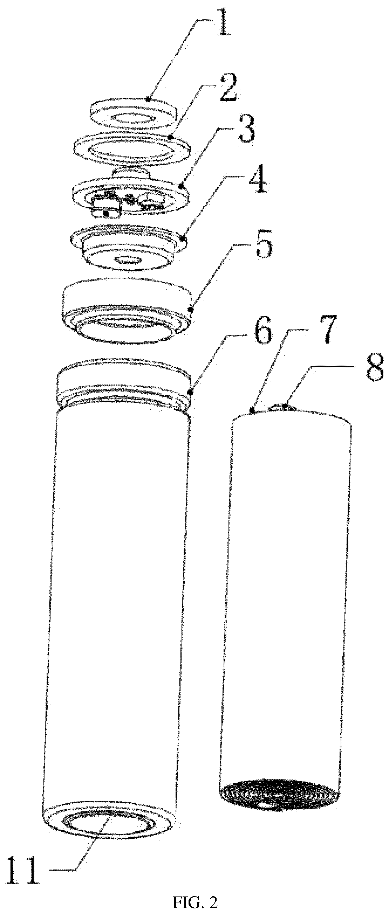

FIG. 2 is the explosive view 1 of a cylindrical lithium battery prepared by the production process of the invention.

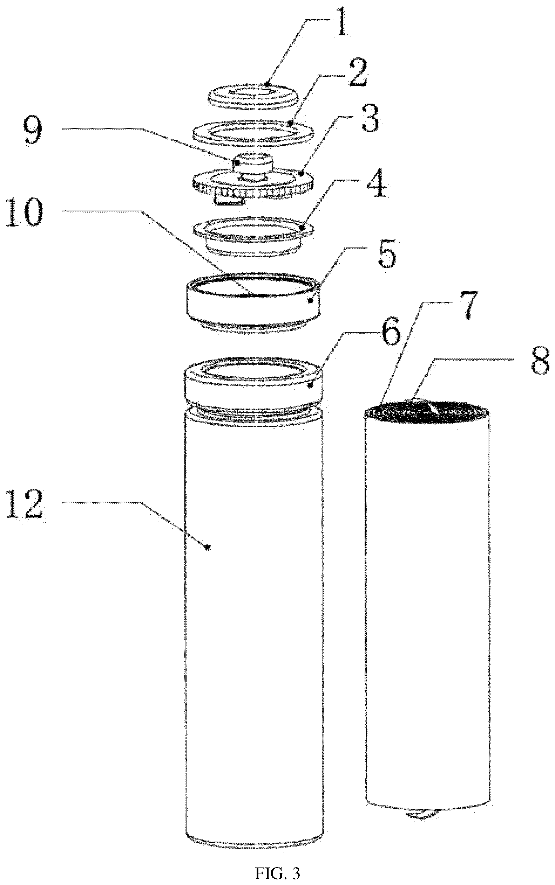

FIG. 3 is the explosive view 2 of a cylindrical lithium battery prepared by the production process of the invention.

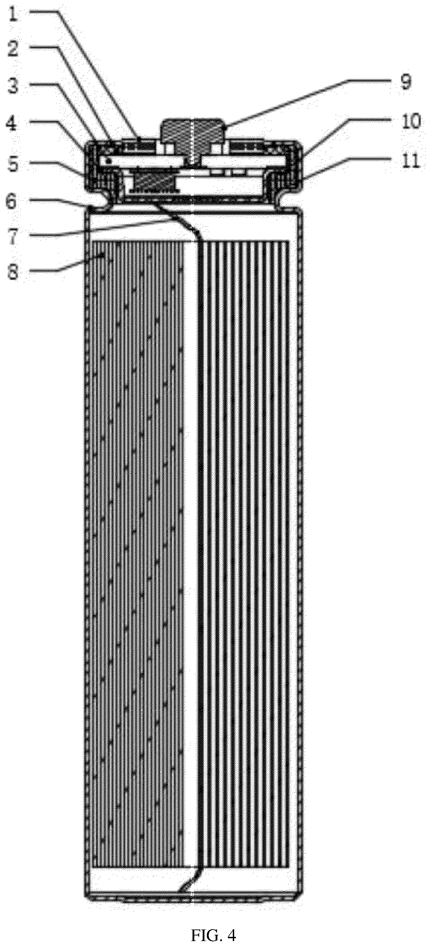

FIG. 4 is the section view of a cylindrical lithium battery prepared by the production process of the invention.

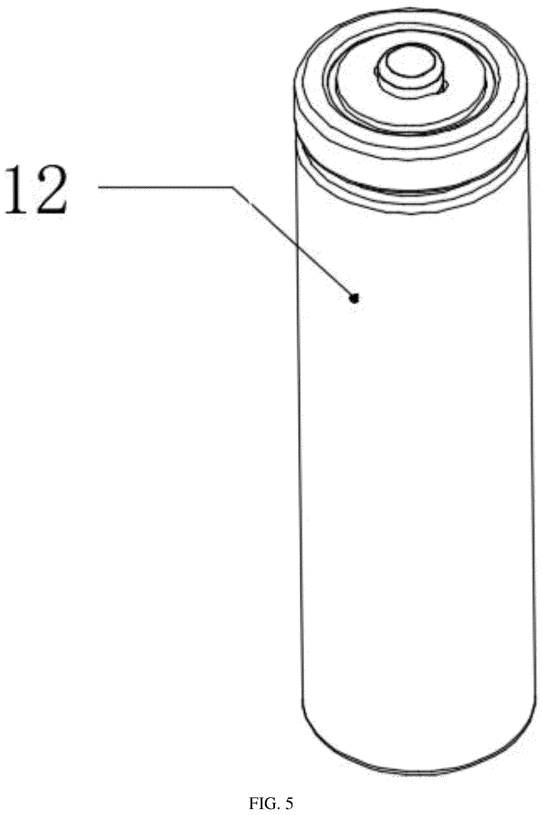

FIG. 5 is the stereogram of a cylindrical lithium battery prepared by the production process of the invention.

In the drawings, the list of components represented by each sign is as follows: 1. Positive plastic cap; 2. Negative metal ring; 3. PCBA; 4. Positive aluminum cap; 5. Plastic support; 6. Steel shell; 7. Battery cell; 8. Positive electrode of battery cell; 9. Positive metal column; 10. Sealant groove; 11. Negative aluminum foil; 12. Rechargeable lithium battery.

### Detailed Description of the Drawings

To make the above purposes, characteristics and advantages of the invention more obvious and understandable, the embodiments of the invention are described in detail below in combination with the drawings.

Many specific details are set forth in the description below to facilitate a full understanding of the invention, but the invention may also be implemented in other ways other than those described herein. The technicians in the field may make similar popularizations without violation from the connotation of the invention, so that the invention is not limited by the embodiments disclosed below.

Secondly, the invention is described in detail in combination with schematic diagrams. When the embodiments of the invention are detailed, the section view representing the device structure will not be locally enlarged by general proportional scale for convenience of explanation, and the schematic diagrams are only examples, which should not limit the scope of protection of the invention. In addition, the three-dimensional sizes of length, width and depth should be included in the actual production.

To make the purpose, technical proposal and advantages of the invention clearer, the embodiments of the invention are further described in detail below in combination with the drawings.

### Embodiment

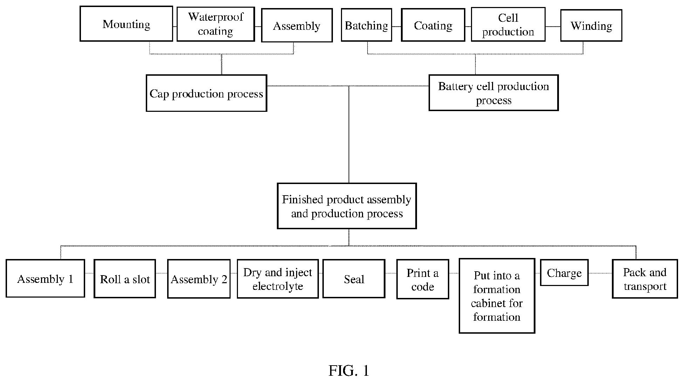

As shown in FIG. 1, a production process for a rechargeable cylindrical lithium battery with a built-in BMS board includes a cap making process, a battery cell manufacturing process and a finished product assembly and manufacturing process, wherein the cap production process includes Step 1: Mounting: Mount a positive metal column 9, an IC and other electronic components onto a PCBA 3 to complete the mounting process of a BMS main board;

Specifically, the mounting process is performed to complete the assembly of the BMS main board to monitor the status of the rechargeable lithium battery; Step 2: Spray waterproof coating on a plastic support, then spray glue, air-dry, and perform soft treatment for the plastic support; the plastic support 5 in Step 2 of the cap production process is made of PP soft material, and the position where glue is sprayed is the bottom surface of a sealant groove 10 and the plastic support 5; the sealant groove 10 is arranged on the inside wall of the plastic support 5; Step 3: Put a positive aluminum cap 4 into the plastic support 5 with glue air-dried, and then put the PCBA 3 and a negative metal ring 2 in turn to complete the production of the lithium battery cap with built-in PCBA 3;Specifically, the waterproof coating is sprayed to improve the waterproofness of the plastic support 5 and then improve the service life of the rechargeable lithium battery 12, and the plastic support 5 is made of PP soft material, has the advantages of light weight and good heat insulation, and passes through the sealant groove 10, further improving the sealing property;

Specifically, the overall production of the lithium battery cap is completed;
the battery cell production process includes Step 1: Batching; Step 2: Coating; Step 3: Cell production; Step 4: Winding;
Step 1 of the battery cell production process is specifically as follows: Prepare solution, positive PVDF and solvent NMP, negative SBR and CMC;
Step 2 of the battery cell production process is specifically as follows: Apply the prepared solution to the aluminum foil;
Step 3 of the battery cell production process is specifically as follows: Add the coated aluminum strip and nickel sheet to an adhesive paper isolation layer, and cut into pole pieces of suitable size;
Step 4 of the battery cell production process is specifically as follows: Wind the produced pole piece and diaphragm paper into a cylindrical shape to complete the production of battery cell;
the finished product assembly and production process includes Step 1: Put a battery cell 7 in a steel shell 6, and laser-weld a negative aluminum foil 11 to the inner bottom of the steel shell 6; specifically, the steel shell 6 receives the battery cell 7, and the negative aluminum foil 11 is connected to the inner bottom of the steel shell 6 by laser welding to meet the power supply requirement; Step 2: Roll a slot for the steel shell 6 so that the battery cell 7 is fixed in the steel shell 6 and cannot fall out; Step 3: Laser-weld a positive electrode 8 of the battery cell to the edge of the back of the positive aluminum cap 4; Step 4: Bake the component with the cap welded to remove moisture and then inject electrolyte; Step 5: Seal, and make the entire circle of the opening of the steel shell 6 rolled inwards to be extruded on the negative metal ring 2, conducting the negative electrode; Step 6: Label a corresponding printing sleeve according to the appearance requirements of the customer, and print a code; Step 7: Put into a formation cabinet for formation and perform aging treatment; Step 8: Fully charge rechargeable lithium batteries 12 after aging, and then sort out the batteries with different capacities and voltages; Step 9: Pack in a special packing box for the rechargeable lithium batteries 12 for safe storage and transportation;
In Step 7 of the finished product assembly and production process, the formation time is 2-3 days to activate the capacity of the battery cell, and the aging time is 8 days.

For the rechargeable cylindrical lithium battery prepared by the production process of the invention, the plastic support 5 is connected to the upper part of the inside wall of the steel shell 6, the positive aluminum cap 4 is arranged in the plastic support 5, the PCBA 3 is arranged in the positive aluminum cap 4, the negative metal ring 2 is arranged in the outer edge of the upper end of the PCBA 3, the positive metal column 9 is connected to the middle of the upper end of the PCBA 3, the battery cell 7 is connected to the inside of the steel shell 6, the end of the positive electrode 8 of the battery cell extends out of the battery cell 7, and the negative aluminum foil 11 is connected to the inner bottom end of the steel shell 6; a positive plastic cap 1 is connected to the outer side of the positive metal column 9. An IC chip of the BMS main board is used to monitor the battery status, including voltage, current, temperature, etc., and control the charging and discharging management of the battery according to the monitoring results; a power management chip is used to control the power supply and charging of the battery; a battery control chip is used to control the discharge and charging of the battery; a multi-circuit protector is used to protect the battery against overvoltage, undervoltage, overcurrent and short circuit.

The production process for the rechargeable lithium battery solves the size and weight problems caused by the traditional external BMS by integrating the BMS board inside the cylindrical lithium battery, and has high integration level and stability, providing protection for battery charging and discharging, and improving the safety performance of the battery.

It should be noted that in the description of the invention, the terms "arranged", "installed" and "connected" should be understood in a broad sense unless otherwise expressly specified and limited, for example, it can be fixedly connected, removably connected or integrally connected; it can be mechanically connected or electrically connected; it can be directly connected, or indirectly connected through an intermediate medium, or connected inside two components. Ordinary technicians in the field may understand the specific meanings of the above terms in the invention as the case may be.

Finally, it should be noted that the above embodiments are only preferred embodiment of the invention and are not used to limit the invention. Although the invention is described in detail by reference to the above-mentioned embodiments, technicians in the field may modify the technical proposal recorded in the above-mentioned embodiments or equivalently substitute part of the technical features. Any modification, equivalent substitution, improvement, etc. made within the principles of the invention should fall within the scope of protection of the invention.

## Claims

1. A production process for a rechargeable cylindrical lithium battery with a built-in BMS board, **characterized by** including a cap making process, a battery cell manufacturing process and a finished product assembly and manufacturing process, wherein
the cap production process includes Step 1: Mount a positive metal column (9), an IC and other electronic components onto a PCBA (3) to complete the mounting process of a BMS main board; Step 2: Spray waterproof coating on a plastic support (5), then spray glue, air-dry, and perform soft treatment for the plastic support; Step 3: Put a positive aluminum cap (4) into the plastic support (5) with glue air-dried, and then put the PCBA (3) and a negative metal ring (2) in turn to complete the production of the lithium battery cap with the built-in PCBA (3);
the battery cell production process includes Step 1: Batching; Step 2: Coating; Step 3: Cell production; Step 4: Winding;
the finished product assembly and production process includes Step 1: Put a battery cell (7) in a steel shell (6), and laser-weld a negative aluminum foil (11) to the inner bottom of the steel shell (6); Step 2: Roll a slot for the steel shell (6) so that the battery cell (7) is fixed in the steel shell (6) and cannot fall out; Step 3: Laser-weld a positive electrode (8) of the battery cell to the edge of the back of the positive aluminum cap (4); Step 4: Bake the component with the cap welded to remove moisture and then inject electrolyte; Step 5: Seal, and make the entire circle of the opening of the steel shell (6) rolled inwards to be extruded on the negative metal ring (2), conducting the negative electrode; Step 6: Label a corresponding printing sleeve according to the appearance requirements of the customer, and print a code; Step 7: Put into a formation cabinet for formation and perform aging treatment; Step 8: Fully charge rechargeable lithium batteries (12) after aging, and then sort out the batteries with different capacities and voltages; Step 9: Pack in a special packing box for the rechargeable lithium batteries (12) for safe storage and transportation.

2. The production process for the rechargeable cylindrical lithium battery with the built-in BMS board according to claim 1, **characterized in that** the plastic support (5) in Step 2 of the cap production process is made of PP soft material, and the position where glue is sprayed is the bottom surface of a sealant groove (10) and the plastic support (5);
The sealant groove (10) is arranged on the inside wall of the plastic support (5).

3. The production process for the rechargeable cylindrical lithium battery with the built-in BMS board according to claim 1, **characterized in that** Step 1 of the battery cell production process is specifically as follows: Prepare solution, positive PVDF and solvent NMP, negative SBR and CMC.

4. The production process for the rechargeable cylindrical lithium battery with the built-in BMS board according to claim 1, **characterized in that** Step 2 of the battery cell production process is specifically as follows: Apply the prepared solution to the aluminum foil.

5. The production process for the rechargeable cylindrical lithium battery with the built-in BMS board according to claim 1, **characterized in that** Step 3 of the battery cell production process is specifically as follows: Add the coated aluminum strip and nickel sheet to an adhesive paper isolation layer, and cut into pole pieces of suitable size.

6. The production process for the rechargeable cylindrical lithium battery with the built-in BMS board according to claim 1, **characterized in that** Step 4 of the battery cell production process is specifically as follows: Wind the produced pole piece and diaphragm paper into a cylindrical shape to complete the production of battery cell.

7. The production process for the rechargeable cylindrical lithium battery with the built-in BMS board according to claim 1, **characterized in that** in Step 7 of the finished product assembly and production process, the formation time is 2-3 days to activate the capacity of the battery cell, and the aging time is 8 days.

8. The production process for the rechargeable cylindrical lithium battery with the built-in BMS board according to claim 1, **characterized in that** the plastic support (5) is connected to the upper part of the inside wall of the steel shell (6), the positive aluminum cap (4) is arranged in the plastic support (5), the PCBA (3) is arranged in the positive aluminum cap (4), the negative metal ring (2) is arranged in the outer edge of the upper end of the PCBA (3), the positive metal column (9) is connected to the middle of the upper end of the PCBA (3), the battery cell (7) is connected to the inside of the steel shell (6), the end of the positive electrode (8) of the battery cell extends out of the battery cell (7), and the negative aluminum foil (11) is connected to the inner bottom end of the steel shell (6);
A positive plastic cap (1) is connected to the outer side of the positive metal column (9).

## Patentansprüche

1. Herstellungsprozess für eine wiederaufladbare zylindrische Lithiumbatterie mit integrierter BMS-Platine, **dadurch gekennzeichnet, dass** es die folgenden Schritte umfasst:
Herstellungsprozess für die Abdeckkappe umfasst Folgendes:
Schritt 1: Aufkleben der Pluspol-Metalsäule (9), des IC und anderer elektronischer Komponenten auf die PCBA (3), um den Patch-Prozess der BMS-Hauptplatine abzuschließen;
Schritt 2: Besprühen der Kunststoffhalterung (5) mit einer wasserfesten Beschichtung, anschließendes Aufsprühen von Klebstoff und Aufweichen der Kunststoffhalterung nach dem Trocknen des Klebstoffs;
Schritt 3: Einsetzen der Pluspol-Aluminiumabdeckung (4) in die Kunststoffhalterung (5) nach dem Trocknen des Klebstoffs, und anschließendes sequentielles Aufbringen der PCBA (3) und des Minuspol-Metalrings (2), um die Herstellung der Lithiumbatterie-Abdeckkappe mit integrierter PCBA (3) abzuschließen;
Herstellungsprozess der Batteriewickelzelle umfasst Folgendes:
Schritt 1: Zubereiten;
Schritt 2: Beschichten;
Schritt 3: Folienherstellung;
Schritt 4: Wickeln;
Montage- und Herstellungsprozess des fertigen Produkts umfasst Folgendes:
Schritt 1: Einsetzen der Batteriewickelzelle (7) in das Stahlgehäuse (6), und Schweißen des Minuspol-Aluminiumblechs (11) mit Laser an den Boden der Innenseite des Stahlgehäuses (6);
Schritt 2: Rillen des Stahlgehäuses (6), um die Batteriewickelzelle (7) im Stahlgehäuse (6) zu fixieren und ein Herausfallen zu verhindern;
Schritt 3: Schweißen des Batteriewickelzellen-Pluspols (8) mit Laser an die Kante der Rückseite der Pluspol-Aluminiumabdeckung (4);
Schritt 4: Brennen der geschweißten Abdeckkappe, um Feuchtigkeit zu entfernen, und anschließendes Einspritzen des Elektrolyts;
Schritt 5: Versiegeln, sodass das Stahlgehäuse (6) geöffnet und kreisförmig nach innen gerollt und auf den Minuspol-Metalring (2) gedrückt wird, um den Minuspol zu leiten;
Schritt 6: Beschriften der entsprechende bedruckte Hülle entsprechend den optischen Anforderungen des Kunden und Aufsprühen des Code;
Schritt 7: Formierung im Schrank und Alterungsbehandlung;
Schritt 8: Aufladen der wiederaufladbaren Lithiumbatterien (12) nach der Alterung vollständig und anschließendes Aussortieren von Batterien unterschiedlicher Kapazität und Spannung;
Schritt 9: Verwenden spezieller Verpackungen für wiederaufladbare Lithiumbatterien (12) zum Verpacken und zur sicheren Lagerung und zum Transport.

2. Herstellungsprozess für eine wiederaufladbare zylindrische Lithiumbatterie mit integrierter BMS-Platine nach Anspruch 1, **dadurch gekennzeichnet, dass**
die Kunststoffhalterung (5) im Schritt 2 des Herstellungsprozesses für die Abdeckkappe aus weichem PP-Material besteht und der Klebstoff auf die Dichtklebenut (10) und den Boden der Kunststoffhalterung (5) gesprüht wird;
wobei die Dichtklebenut (10)an der Innenseite der Kunststoffhalterung (5) geöffnet ist.

3. Herstellungsprozess für eine wiederaufladbare zylindrische Lithiumbatterie mit integrierter BMS-Platine nach Anspruch 1, **dadurch gekennzeichnet, dass** Schritt 1 im Herstellungsprozess der Batteriewickelzelle insbesondere Folgendes umfasst:
Vorbereitung einer Lösung bestehend aus Pluspol-PVDF, NMP als Lösungsmittel, Minuspol-SBR und CMC als Lösungsmittel.

4. Herstellungsprozess für eine wiederaufladbare zylindrische Lithiumbatterie mit integrierter BMS-Platine nach Anspruch 1, **dadurch gekennzeichnet, dass** Schritt 2 im Herstellungsprozess der Batteriewickelzelle insbesondere Folgendes umfasst:
Auftragen der vorbereiteten Lösung auf das Aluminiumblech.

5. Herstellungsprozess für eine wiederaufladbare zylindrische Lithiumbatterie mit integrierter BMS-Platine nach Anspruch 1, **dadurch gekennzeichnet, dass** Schritt 3 im Herstellungsprozess der Batteriewickelzelle insbesondere Folgendes umfasst:
Legen des beschichteten Aluminiumstreifens und das Nickelblechs auf den Klebeband-Separator und Schneiden der Elektrodenfolie auf die passende Größe.

6. Herstellungsprozess für eine wiederaufladbare zylindrische Lithiumbatterie mit integrierter BMS-Platine nach Anspruch 1, **dadurch gekennzeichnet, dass** Schritt 4 im Herstellungsprozess der Batteriewickelzelle insbesondere Folgendes umfasst:
Wickeln der hergestellten Elektrodenfolie und Membranpapier zu einer zylindrischen Form, um die Herstellung der Batteriewickelzelle abzuschließen.

7. Herstellungsprozess für eine wiederaufladbare zylindrische Lithiumbatterie mit integrierter BMS-Platine nach Anspruch 1, **dadurch gekennzeichnet, dass** Im Schritt 7 des Montage- und Herstellungsprozesses des fertigen Produkts die Zeit für Formierung im Schrank 2- bis 3 Tage beträgt, um die Kapazität der Batteriezelle zu aktivieren, und die Alterungszeit 8 Tage beträgt.

8. Herstellungsprozess für eine wiederaufladbare zylindrische Lithiumbatterie mit integrierter BMS-Platine nach Anspruch 1, **dadurch gekennzeichnet, dass**
die Kunststoffhalterung (5) mit dem oberen Teil der Innenwand des Stahlgehäuses (6) verbunden ist, die Pluspol-Aluminiumabdeckung (4) in der Kunststoffhalterung (5) angeordnet ist, die PCBA (3) in der Pluspol-Aluminiumabdeckung (4) angeordnet ist, der Minuspol-Metalring (2) an der oberen Außenkante der PCBA (3) angeordnet ist, die Pluspol-Metalsäule (9) mit dem oberen Mittelteil der PCBA (3) verbunden ist, die Batteriewickelzelle (7) mit der Innenseite des Stahlgehäuses (6) verbunden ist, der Endabschnitt des Batteriewickelzellen-Pluspols (8) aus der Batteriewickelzelle (7) herausragt und das Minuspol-Aluminiumblech (11) mit dem inneren unteren Ende des Stahlgehäuses (6) verbunden ist;
wobei die Pluspol-Kunststoffabdeckung (1) mit der Außenseite der Pluspol-Metalsäule (9) verbunden ist.

## Revendications

1. Un procédé de production de batteries lithium-ion cylindriques rechargeables à carte BMS intégrée, **caractérisé en ce qu'**il s'agit des étapes suivantes :
Procédé de fabrication du capuchon, comprenant :
Étape 1. Poser la borne métallique d'électrode positive (9), le circuit intégré (CI) et les autres éléments électroniques sur le PCBA (3), afin de réaliser la pose d'éléments sur la carte mère BMS ;
Étape 2. Appliquer un revêtement imperméable sur le support en plastique (5), qui sera ensuite soumis à la pulvérisation de colle, suivie d'un traitement par d'adoucissement après séchage à l'air de la colle ;
Étape 3. Monter le capuchon en aluminium de l'électrode positive (4) dans le support en plastique (5) après le séchage à l'air de la colle, puis monter successivement le PCBA (3) et l'anneau métallique de l'électrode négative (2), afin de réaliser ainsi la fabrication du capuchon d'une batterie lithium-ion à PCBA (3) intégré ;
Procédé de fabrication du noyau enroulé de batterie, comprenant :
Étape 1. Mélange des ingrédients ;
Étape 2. Enduction ;
Étape 3. Découpage ;
Étape 4. Enroulement ;
Procédé d'assemblage et de fabrication du produit fini, comprenant :
Étape 1. Montage du noyau enroulé de batterie (7) dans le boîtier en acier (6), suivi d'un soudage par laser de la feuille d'aluminium de l'électrode négative (11) au fond à l'intérieur du boîtier en acier (6) ;
Étape 2. Rainurage par roulage du boîtier en acier (6) pour fixer le noyau enroulé de batterie (7) à l'intérieur du boîtier (6) sans risquer qu'il ne se détache ;
Étape 3. Soudage au laser de l'électrode positive (8) du noyau enroulé de batterie sur le bord à l'envers du capuchon en aluminium de l'électrode positive (4) ;
Étape 4. Déshumidification par étuvage de l'ensemble du capuchon soudé, suivi de l'injection d'électrolyte liquide ;
Étape 5. Scellement pour enrouler complètement le bord ouvert du boîtier en acier (6) vers l'intérieur, de sorte qu'il s'appuie sur l'anneau métallique de l'électrode négative (2) afin de mettre l'électrode négative en état conducteur ;
Étape 6. Mise en place de la gaine imprimée correspondante selon les exigences en matière d'apparence du client, avec un marquage par pulvérisation ;
Étape 7. Activation en armoire et traitement de vieillissement ;
Étape 8. Recharge complète des batterie lithium-ion rechargeables (12) après le vieillissement, pour trier ensuite les batteries selon leur capacité et tension ;
Étape 9. Emballage des batteries lithium-ion rechargeables (12) dans des caisses d'emballage dédiés à cet effet, pour assurer leur sécurité pendant le stockage et le transport.

2. Un procédé de production de batteries lithium-ion cylindriques rechargeables à carte BMS intégrée selon la revendication 1, **caractérisé en ce que**,
À l'étape 2 dudit procédé de fabrication du capuchon, le support plastique (5) est fabriqué en matériau souple PP, et l'application de colle par pulvérisation porte sur la gorge d'étanchéité (10) et la face inférieure du support plastique (5) ;
Ladite gorge d'étanchéité (10) est formée sur la paroi intérieure du support plastique (5).

3. Un procédé de production de batteries lithium-ion cylindriques rechargeables à carte BMS intégrée selon la revendication 1, **caractérisé en ce que**,
L'étape 1 dudit procédé de fabrication du noyau enroulé de batterie consiste à :
Préparer de la solution, à partir de PVDF et de solvant NMP pour l'électrode positive, de SBR et CMC pour l'électrode négative.

4. Un procédé de production de batteries lithium-ion cylindriques rechargeables à carte BMS intégrée selon la revendication 1, **caractérisé en ce que**,
L'étape 2 dudit procédé de fabrication du noyau enroulé de batterie consiste à :
Appliquer la solution préparée sur la feuille d'aluminium.

5. Un procédé de production de batteries lithium-ion cylindriques rechargeables à carte BMS intégrée selon la revendication 1, **caractérisé en ce que**,
L'étape 3 dudit procédé de fabrication du noyau enroulé de batterie consiste à :
Introduire une couche de séparation en papier adhésif entre la bande d'aluminium enduite et la feuille de nickel, pour découper ensuite des électrodes aux dimensions appropriées.

6. Un procédé de production de batteries lithium-ion cylindriques rechargeables à carte BMS intégrée selon la revendication 1, **caractérisé en ce que**,
L'étape 4 dudit procédé de fabrication du noyau enroulé de batterie consiste à :
Enrouler les électrodes découpées et le papier séparateur en forme cylindrique, pour terminer ainsi la fabrication du noyau enroulé de batterie.

7. Un procédé de production de batteries lithium-ion cylindriques rechargeables à carte BMS intégrée selon la revendication 1, **caractérisé en ce que**,
À l'étape 7 dudit procédé d'assemblage et de fabrication du produit fini, la durée d'activation en armoire est de 2-3 jours pour activer la capacité de la cellule, et la durée de vieillissement est de 8 jours.

8. Un procédé de production de batteries lithium-ion cylindriques rechargeables à carte BMS intégrée selon la revendication 1, **caractérisé en ce que**,
Ledit support en plastique (5) est assemblé à la partie supérieure de la paroi intérieure du boîtier en acier (6) ; le capuchon en aluminium de l'électrode positive(4) est disposée à l'intérieur du support en plastique (5) ; le PCBA (3) est disposé à l'intérieur du capuchon en aluminium de l'électrode positive (4) ; l'anneau métallique de l'électrode négative (2) est disposé sur la périphérie extérieure en haut du PCBA (3) ; la borne métallique d'électrode positive (9) est assemblée à la partie centrale supérieure du PCBA (3) ; le noyau enroulé de batterie (7) est fixé à l'intérieur du boîtier en acier (6) ; l'extrémité de l'électrode positive (8) du noyau enroulé de batterie s'étend hors du noyau enroulé (7) ; la feuille d'aluminium d'électrode négative (11) est assemblée au fond à l'intérieur du boîtier en acier (6) ;
Le couvercle en plastique de l'électrode positive (1) est prévu à l'extérieur de la borne métallique de l'électrode positive (9).
